# EUROPÄISCHE PATENTANMELDUNG

(11) **EP 1 489 153 A1**
(43) Veröffentlichungstag der Anmeldung: **22.12.2004**
(21) Anmeldenummer: 04012843.1
(22) Anmeldetag: 29.05.2004
(51) Int. Cl.: C09J 133/00

(54) **Repulpierbare Haftklebemassen**

(30) Priorität: 17.06.2003 DE 10327198
(71) Anmelder: tesa AG, 20253 Hamburg (DE)
(72) Erfinder: Husemann, Marc, Dr., 22605 Hamburg (DE); Zöllner, Stephan, Dr., 22043 Hamburg (DE); Westphal, Andreas, 22049 Hamburg (DE)

(57) **Zusammenfassung**

Die Erfindung betrifft eine repulpierbare Haftklebemasse. Dabei ist vorgesehen, dass die repulpierbare Haftklebemasse zumindest ein Blockcopolymer auf Polyacrylatbasis umfasst.

## Beschreibung

Die Erfindung betrifft repulpierbare Haftklebemassen sowie Haftklebebänder, Labels oder andere haftklebrige Artikel, ausgestattet mit diesen Haftklebemassen bzw. deren Formulierungen. Die beschriebenen Haftklebemassen werden bevorzugt in der papierverarbeitenden Industrie als repulpierbare und recyclingfähige Produkte eingesetzt.

In der Papierverarbeitung und für die Druckverfahren ist es erforderlich, Papiere zu splicen, um einen kontinuierlichen Prozess zu gewährleisten. An den Splice-Prozess und somit an die Splice-Haftklebebänder werden sehr hohe Anforderungen gestellt, da heute bereits Prozessgeschwindigkeiten von größer 1500 m/min durchaus üblich sind. Splice-Haftklebebänder müssen einen guten Tack aufweisen, sollten aber auch für die Schereinwirkung eine hohe Dimensionsstabilität besitzen. Neben den klebetechnischen Anforderungen sollten die Haftklebemassen ebenfalls den Recyclingprozess des Papiers überstehen, d. h. nach der Aufarbeitung sollte auf dem Papier keine Anfassklebrigkeit vom Splicing-Tape verbleiben.

Weiterhin haben sich in den letzten Jahren die Aufarbeitungsbedingungen für den Papierrecyclingprozess verändert. Früher wurde unter aciden Bedingungen aufgearbeitet. Zur Zeit besteht eher der Trend zur Aufarbeitung im basischen Medium.

Zum Erreichen der oben genannten Anforderungen wurden in der Patentliteratur bereits viele unterschiedliche Haftklebebänder beschrieben. Das erste repulpierbare Splicing-Tape wurde in US 2,838,421 beschrieben. Hier wurde Polyacrylsäure mit Polypropylenglycol vermischt und auf diesem Weg ein wasserlöslicher Haftklebstoff hergestellt. In US 3,441,430 wird ein repulpierbares Haftklebeband auf Basis von Acrylsäure/Ethylacrylat-Copolymeren und wasserlöslichen Weichmachern mit zumindest einer Etherfunktion beschrieben.

In US 3,661,874 werden epoxidierte Kautschuke offenbart, die mit sekundären Monoaminen umgesetzt und mit wasserlöslichen Weichmachern compoundiert wurden. In DE 2 360 441 werden Copolymere aus Acrylaten und Vinylcarbonsäuren beschrieben, die zum Teil mit flüssigen Polyoxyethylenen und/oder einem Reaktionsprodukt aus acidischen Harzen und Alkanolaminen neutralisiert wurden. Die Kohäsion dieser Haftklebemassen kann durch ethoxylierte Diamine als Weichmacher gesteigert werden (DE 3 105 894).

Zur Steigerung der Splicestärke bei relativ hohen Temperaturen kann Acrylamid eingesetzt werden (DE 3 901 690 und EP 0,081,846). Terpolymere aus N-Vinyllactamen oder N-Vinylamiden, Acrylsäure und Alkylvinylestern, offenbart in DE-C 34 23 446 bewirken ebenfalls eine Steigerung der Splicestärke bei hohen Temperaturen. Acrylsäure kann auch durch Acryloyloxypropansäure substituiert werden (EP 0,352,442).

In PCT/US 92/06731 werden Terpolymere offenbart, die aus polaren Monomeren, wie z. B. Säuren oder Hydroxyalkylestern, und weniger polaren Monomeren, wie z. B. Acrylat-basierenden Alkylestern und polymerisierbaren, wasserlöslichen Makromonomeren bestehen. Diese Terpolymere wurden ebenfalls mit wasserlöslichen Weichmachern vermischt und wiesen eine hohe Repulpierbarkeit in einem weiten pH-Wert-Bereich auf.

Die oben aufgezählten Polymere besitzen aber den Nachteil, dass sie entweder Probleme im alkalischen Aufarbeitungsprozess durch Formung von Agglomeraten verursachen oder auf Calciumcarbonat-haltigen Papieren ebenfalls Agglomerate bilden, die die Haftklebrigkeit des Polymers bei Verklebung über einen längeren Zeitraum deutlich herabsetzen.

Es besteht somit der Bedarf für eine Haftklebemasse, die die oben genannten Nachteile des Standes der Technik nicht aufweist.

Der Erfindung liegt somit die Aufgabe zugrunde, eine Haftklebemasse anzugeben, die eine hohe Splicestärke und Haftklebrigkeit über einen langen Zeitraum und in basischen Medien aufweist.

Diese Aufgabe wird durch die Merkmale der Ansprüche 1, 15 und 16 gelöst. Zweckmäßige Ausgestaltungen der Erfindungen ergeben sich aus den Merkmalen der Ansprüche 2 bis 14.

Nach Maßgabe der Erfindung ist eine repulpierbare Haftklebemasse vorgesehen, die zumindest ein Blockcopolymer auf Polyacrylatbasis umfasst. Darüber hinaus ist ein repulpierbares Haftklebeband vorgesehen, dass aus einem Trägermaterial besteht, das auf mindestens einer Seite mit einer druckempfindlichen Haftklebemasse beschichtet ist, die Blockcopolymere auf Polyacrylatbasis umfasst.

Die erfindungsgemäß eingesetzten Blockcopolymere sind gekennzeichnet durch eine Abfolge von "harten und polaren" Polymerblöcken [P(A) oder P(A/C)] mit einer hohen Erweichungs-/Glasübergangstemperatur und "weichen und weniger polaren" Polymerblöcken [P(B) oder P(B/D)] mit einer niedrigen Erweichungs-/Glasübergangstemperatur, wobei die Blockcopolymere vorteilhaft zumindest eine Triblockcopolymerstruktur [P(A)-P(B)-P(A) und/oder P(B)-P(A)-P(B), wobei jeweils P(A) durch P(A/C) und/oder P(B) durch P(B/D) substituiert sein kann] aufweisen. P(A/C) und P(B/D) bezeichnen dabei Polymerblöcke, die als Copolymer aus A und C bzw. B und D aufgebaut sind.

Einige vorteilhafte Ausführungsformen, welche sich erfindungsgemäß besonders vorteilhaft verwenden lassen, sind im Folgenden beispielhaft dargestellt.

Als erfindungsgemäß verwendbare Haftklebemassen lassen sich beispielsweise hervorragend solche Haftklebemassen auf der Basis von Blockcopolymeren des allgemeinen Typs P(A)-P(B/D)-P(A) einsetzen, bei denen jedes Blockcopolymer aus einem mittleren Copolymer-Block P(B/D) und zwei Endpolymerblöcken P(A) besteht, wobei
- P(B/D) ein Copolymer aus den Monomeren B und D repräsentiert, wobei P(B/D) eine Erweichungs-/Glasübergangstemperatur von 0 °C bis -80 °C besitzt, wobei die Komponente D mindestens eine funktionelle Gruppe besitzt, welche sich in einer radikalischen Polymerisationsreaktion inert verhält, und welche zur Steigerung der Kohäsion des Blockcopolymers dient,
- P(A) ein Polymer aus den Monomeren A repräsentiert, wobei P(A) eine Erweichungs-/Glasübergangstemperatur von 20 °C bis 175 °C besitzt und zumindest eine polare Einheit, wie z. B. eine Carbonsäure-, Hydroxy-, Amid-, Sulfonsäure- oder Phosphorsäuregruppe trägt,
- der Polymer-Block P(A) in dem Copolymer-Block P(B/D) unlöslich ist und die Blöcke P(A) und P(B/D) nicht mischbar sind.

Unter Erweichungstemperatur sollen hier eine Glasübergangstemperatur für amorphe Systeme und eine Schmelztemperatur bei semikristallinen Polymeren verstanden werden. Die hier angegebenen Temperaturen entsprechen solchen, die aus quasistationären Experimenten, wie z. B. DSC, erhalten werden.

In günstiger Weise kann die kohäsionssteigernde Wirkung des Copolymers P(B/D) durch Bindungen zwischen den einzelnen Blockcopolymeren P(A)-P(B/D)-P(A) hervorgerufen werden, wobei die funktionelle Gruppe der Komponente D eines Blockcopolymer-Makromoleküls mit zumindest einem weiteren Blockcopolymer-Makromolekül in Wechselwirkung tritt. In besonders vorteilhafter Weise ruft die funktionelle Gruppe der Komponente D mittels Dipol-Dipol-Wechselwirkungen und/oder Wasserstoffbrückenbindungen die Steigerung der Köhasion hervor. Besonders bevorzugt ist die funktionelle Gruppe der Komponente D eine Carbonsäuregruppe, eine Hydroxygruppe oder eine tert.-Butylgruppe.

Als Komponente B wird bevorzugt zumindest eine Verbindung der folgenden allgemeinen Formel 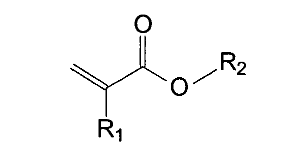 eingesetzt wird, wobei R₁ = H oder CH₃ und R₂ aus der Gruppe der verzweigten oder unverzweigten, gesättigten Alkylgruppen mit 4 - 14 Kohlenstoffatomen ausgewählt ist.

Als Komponente A werden die Monomere bevorzugt derart ausgewählt, dass die entstehenden Polymer-Blöcke P(A) in der Lage sind, eine 2-Phasen-Domänenstruktur mit den Copolymer-Blöcken P(B/D) auszubilden. Der Anteil der Polymerblöcke P(A) liegt sehr bevorzugt zwischen 10 und 60 Gew.-%, insbesondere zwischen 25 und 50 Gew.-% des gesamten Blockcopolymers. Weiterhin liegt der Gewichtsanteil der Komponente D im Verhältnis zur Komponente B vorteilhaft zwischen 0 und 30 Gew.-%, insbesondere zwischen 0,5 und 20 Gew.-%.

Eine weitere Haftklebemasse, welche in hervorragender Art und Weise im erfinderischen Sinne verwendet werden kann, basiert auf Blockcopolymere des allgemeinen Typs P(B)-P(A)-P(B) oder des Typs P(B/D)-P(A)-P(B/D), wobei jedes Blockcopolymer aus einem mittleren (Co-)Polymerblock P(A) und zwei End(co)polymerblöcken P(B) bzw. P(B/D) besteht, wobei
- P(B) ein (Co-)Polymer, das aus zumindest einem Monomer B besteht, repräsentiert, wobei P(B) eine Erweichungs-/Glasübergangstemperatur von 0 °C oder tiefer besitzt, bzw. P(B/D) ein Copolymer aus den Monomeren B und D repräsentiert, wobei P(B/D) eine Erweichungs-/Glasübergangstemperatur von 0 °C oder tiefer besitzt, wobei die Komponente D mindestens eine funktionelle Gruppe besitzt, welche sich in einer radikalischen Polymerisationsreaktion inert verhält, und welche zur Steigerung der Kohäsion des Blockcopolymers dient,
- P(A) ein (Co-)Polymer aus zumindest einem Monomer A repräsentiert, wobei P(A) eine Erweichungs-/Glasübergangstemperatur von 20 °C oder höher besitzt und zumindest eine polare Einheit, wie z. B. eine Carbonsäure-, Hydroxy-, Amid-, Sulfonsäure- oder Phosphorsäuregruppe trägt,
- der (Co-)Polymerblock P(A) in dem (Co-)Polymerblock P(B) bzw. P(B/D) unlöslich ist, die Blöcke P(B) sowie P(B/D) und P(A) nicht mischbar sind.

Bevorzugt enthält die Komponente D zumindest eine funktionelle Gruppe, welche sich in einer radikalischen Polymerisationsreaktion inert verhält, und welche zur Erhöhung der Kohäsion des Blockcopolymers dienen kann; insbesondere durch Bindungen zwischen den einzelnen Blockcopolymeren, wobei die funktionelle Gruppe der Komponente D eines Blockcopolymer-Makromoleküls mit zumindest einem weiteren Blockcopolymer-Makromolekül in Wechselwirkung tritt; insbesondere durch eine Vernetzungsreaktion. Die zur funktionelle Gruppe zur Erhöhung der Kohäsion kann sehr vorteilhaft eine Hydroxy-, eine Carboxy-, eine Epoxy-, eine Säureamid-, eine Isocyanato- oder eine Aminogruppe, eine einen Photoinitiator zur UV-Vernetzung beinhaltende Gruppe oder eine ungesättigte Gruppe sein.

Weiter vorteilhaft besitzt der Block P(B) bzw. P(B/D) eine Erweichungs-/Glasübergangstemperatur zwischen -80 °C und 0 °C und/oder der Block P(A) eine Erweichungs-/Glasübergangstemperatur zwischen 20 °C und 180 °C.

Bevorzugt liegt der Anteil der (Co-)Polymerblöcke P(A) zwischen 30 und 70 Gew.-%, insbesondere zwischen 40 und 65 Gew.-% des gesamten Blockcopolymers. In günstiger Weise liegt der Gewichtsanteil der Komponente D im Verhältnis zur Komponente B zwischen 0 und 30 Gew.-%, insbesondere zwischen 0,5 und 20 Gew.-%.

Eine weitere erfindungsgemäß vorteilhaft verwendbare Haftklebemasse ist eine solche auf Basis von Blockcopolymeren des allgemeinen Typs P(A/C)-P(B)-P(A/C), wobei jedes Blockcopolymer aus einem mittleren Polymerblock P(B) und zwei Endcopolymerblöcken P(A/C) besteht, wobei
- P(B) ein Polymer aus den Monomeren B repräsentiert, welches eine Erweichungs-/Glasübergangstemperatur von 0 °C bis -80 °C besitzt, wobei die Komponente B ein oder mehrere Monomere umfassen kann, und wobei die Erweichungs-/Glasübergangstemperatur des Blocks P(B) unterhalb 0 °C liegt,
- P(A/C) ein Polymer aus zumindest zwei Monomeren A und C repräsentiert, wobei der Block P(A/C) eine Erweichungs-/Glasübergangstemperatur von 20 °C bis 175 °C besitzt und wobei die Komponente C aus der Gruppe der Monomere gewählt ist, die als Homopolymere eine Erweichungs-/Glasübergangstemperatur von größer 60 °C aufweisen oder zur UV-Vernetzung befähigt sind,
- der Polymer-Block P(B) in dem Copolymerblock P(A/C) unlöslich ist, die Blöcke P(B) und P(A/C) nicht mischbar sind.

Als Komponente C wird in günstiger Vorgehensweise zumindest mengenmäßig eine Verbindung eingesetzt, welche die Erweichungs-/Glasübergangstemperatur des Copolymer-Blocks P(A/C) auf T_{G} > 20 °C heraufsetzt. Als Komponenten A und C werden bevorzugt Monomere gewählt, die dazu führen, dass der Block P(A/C) in der Lage ist, eine 2-Phasen-Domänenstruktur mit den Copolymerblock P(B) auszubilden, wobei A und C auch identisch sein können.

Vorteilhaft liegt der Anteil der Polymerblöcke P(A/C) zwischen 20 und 70 Gew.-%, insbesondere zwischen 30 und 65 Gew.-% des gesamten Blockcopolymers. Weiter vorteilhaft liegt der Gewichtsanteil der Komponente C im Verhältnis zur Komponente A zwischen 0 und 30 Gew.-%, insbesondere zwischen 0,5 und 15 Gew.-%.

Vorteilhaft lässt sich der Aufbau zumindest eines Blockcopolymers durch eine oder mehrere der folgenden allgemeinen Formeln beschreiben:

P(A)-P(B)-P(A) (I)

P(A)-P(B)-P(A)-P(B)-P(A) (II)

[P(A)-P(B)]ₙX (III)

[P(A)-P(B)]ₙX[P(B)]ₘ (IV),

- wobei n = 3 bis 12, m = 3 bis 12 und X einen multifunktionellen Verzweigungsbereich darstellt,
- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen und zumindest eine polare Einheit, wie z. B. eine Carbonsäure-, Hydroxy-, Amid-, Sulfonsäure- oder Phosphorsäuregruppe tragen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von - 80 °C bis 0 °C aufweisen.

Weiter vorteilhaft weist zumindest ein Blockcopolymer einen symmetrischen Aufbau derart auf, dass in der Kettenlänge und/oder der chemischen Struktur identische Polymerblöcke P(A) und/oder dass in der Kettenlänge und/oder der chemischen Struktur identische Polymerblöcke P(B) vorliegen.

Es ist günstig, wenn zumindest ein Blockcopolymer eines oder mehrere der folgenden Kriterien erfüllt:
- eine Molmasse Mₙ zwischen 25.000 und 600.000 g/mol, bevorzugt zwischen 30.000 und 400.000 g/mol, besonders bevorzugt zwischen 50.000 und 300.000 g/mol,
- eine Polydispersität D = M_{w}/Mₙ von nicht mehr als 3,
- einen Anteil der Polymerblöcke P(A) zwischen 15 und 70 Gew.-%, bevorzugt zwischen 20 und 60 Gew.-%, insbesondere zwischen 30 und 55 Gew.-%, bezogen auf die Triblockcopolymerzusammensetzung
- ein oder mehrere aufgepropfte Seitenketten.

Insbesondere kann das Verhältnis der Kettenlängen der Polymerblöcke P(B) zu denen der Polymerblöcke P(A) so gewählt werden, dass die Polymerblöcke P(A) als disperse Phase ("Domänen") in einer kontinuierlichen Matrix der Polymerblöcke P(B) vorliegen.

Weiterhin können vorteilhaft Blends aus polyacrylatbasierenden Blockcopolymeren als repulpierbare Haftklebemassen eingesetzt werden. So läßt sich hervorragend ein Polymerblend mehrerer Blockcopolymere entsprechend den vorstehenden Ausführungen einsetzen, weiterhin auch ein Blend eines oder mehrerer Blockcopolymere entsprechend der vorstehenden Ausführungen mit zumindest einem Diblockcopolymer P(A)-P(B),
- wobei die Polymerblöcke P(A) unabhängig voneinander Homo- oder Copolymerblöcke aus den Monomeren A repräsentieren, wobei die Polymerblöcke P(A) jeweils eine Erweichungs-/Glasübergangstemperatur im Bereich von + 20 °C bis + 175 °C aufweisen und zumindest eine polare Einheit, wie z. B. eine Carbonsäure-, Hydroxy-, Amid-, Sulfonsäure- oder Phosphorsäuregruppe tragen,
- und wobei die Polymerblöcke P(B) unabhängig voneinander Homo- oder Copolymerblöcke aus den Monomeren B repräsentieren, wobei die Polymerblöcke P(B) jeweils eine Erweichungs-/Glasübergangstemperatur im Bereich von - 80 °C bis + 10 °C aufweisen.

Weiterhin hervorragend entsprechend des erfindungsgemäßen Gedanken einsetzbar ist ein Blend aus zumindest zwei Komponenten K1 und K2, jede Komponente basierend auf zumindest einem Blockcopolymer P1 beziehungsweise P2,
- wobei das zumindest eine Blockcopolymer P1 der Komponente K1 mindestens die Einheit P(A1)-P(B1)-P(A1) aus wenigstens einem Polymerblock P(B1) und wenigstens zwei Polymerblöcken P(A1) aufweist, wobei
   - P(A1) unabhängig voneinander Homo- oder Copolymerblöcke aus Monomeren A1 repräsentiert, wobei die Polymerblöcke P(A1) jeweils eine Erweichungs-/Glasübergangstemperatur im Bereich von + 20 °C bis + 175 °C aufweisen und zumindest eine polare Einheit, wie z.B. eine Carbonsäure-, Hydroxy-, Amid-, Sulfonsäure- oder Phosphorsäuregruppe tragen,
   - P(B1) einen Homo- oder Copolymerblock aus Monomeren B1 repräsentiert, wobei der Polymerblock P(B1) eine Erweichungs-/Glasübergangstemperatur im Bereich von - 80 °C bis 0 °C aufweist,
   - die Polymerblöcke P(B1) und P(A1) nicht homogen miteinander mischbar sind,
- wobei das zumindest eine Blockcopolymer P2 der Komponente K2 mindestens die Einheit P(B2)-P(A2)-P(B2) aus wenigstens zwei Polymerblöcken P(B2) und wenigstens einem Polymerblock P(A2) aufweist, und wobei
   - P(A2) einen Homo- oder Copolymerblock aus Monomeren A2 repräsentiert, wobei der Polymerblock P(A2) eine Erweichungs-/Glasübergangstemperatur im Bereich von + 20 °C bis + 175 °C aufweisen und zumindest eine polare Einheit, wie z. B. eine Carbonsäure, Hydroxy-, Amid-, Sulfonsäure, oder Phosphorsäuregruppe trägt,
   - P(B2) unabhängig voneinander Homo- oder Copolymerblöcke aus Monomeren B2 repräsentiert, wobei die Polymerblöcke P(B2) jeweils eine Erweichungs-/Glasübergangstemperatur im Bereich von - 80 °C bis 0 °C aufweist,
   - die Polymerblöcke P(B2) und P(A2) nicht homogen miteinander mischbar sind,
- und wobei der Blend ein zumindest zweiphasiges System ausbildet.

Vorteilhaft beträgt das Verhältnis V der im Blend eingesetzten Menge m_{K2} der Komponente K2 zu der im Blend eingesetzten Menge m_{K1}, der Komponente K1 bis zu 250 Gewichtsteile K2 auf 100 Gewichtsteile K1, also V = m_{K2}/m_{K1} ≤2,5.

Bevorzugt sind die Blöcke P(B1) mit den Blöcken P(B2) und/oder deren jeweils korrespondierenden Polymere P'(B1) mit P'(B2) und/oder die Blöcke P(A1) mit den Blöcken P(A2) und/oder deren jeweils korrespondierenden Polymere P'(A1) mit P'(A2) verträglich.

Weiter vorteilhaft besitzen die Polymerblöcke P(B1) und die Polymerblöcke P(B2) und/oder die Polymerblöcke P(A1) und die Polymerblöcke P(A2) eine identische Homo- und/oder Copolymerzusammensetzung.

Es ist günstig, wenn die mittlere Kettenlänge LA2 der Polymerblöcke P(A2) des Blockcopolymers P2 die mittlere Kettenlänge LA1 des Polymerblocks P(A1) des Blockcopolymers P1 nicht übersteigt, wobei vorteilhaft LA2 mindestens 10 % kleiner als LA1, sehr vorteilhaft LA2 mindestens 20 % kleiner ist als LA1 ist.

Weiterhin ist es von Vorteil, wenn die Polymerblöcke P(Ai) (i = 1, 2,...) als disperse Phase ("Domänen") in einer kontinuierlichen Matrix der Polymerblöcke P(Bi) vorliegen, bevorzugt als kugelförmige oder verzerrt kugelförmige Domänen, wobei dieser Zustand insbesondere durch Einstellung des Verhältnisses V_{Li}; der mittleren Kettenlängen LAi der Polymerblöcke P(Ai) zu den mittleren Kettenlängen LBi der Polymerblöcke P(Bi) der Blockcopolymere Pi erzielt wird, sehr bevorzugt durch Einstellung des Verhältnisses V_{L1} des Blockcopolymers P1.

Neben den vorstehend besonders geeigneten Haftklebemassen seien auch noch diejenigen erwähnt, welche Sternstrukturen aufweisen, etwa entsprechend

[P(A)-P(B)]ₙX

[P(B)-P(A)]ₙX

[P(B)-P(A)-P(B)]ₙX

[P(A)-P(B)-P(A)]ₙX

oder allgemein 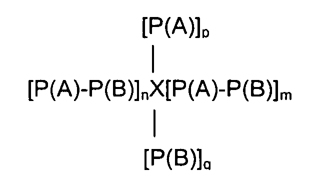 wobei m und n unabhängig voneinander Ganzzahlen größer oder gleich 1 sind und zumindest m oder n größer oder gleich 1 ist; p und q unabhängig eine Ganzzahl größer oder gleich 0 sind, und X eine multifunktionelle Verzweigungseinheit darstellt, also ein chemisches Bauelement, über das mehrere Polymerarme miteinander verknüpft sind. Dabei können auch mehrere Verzweigungseinheiten in den Polymeren vorhanden sein. X wird in der Regel durch das Polymerisationsverfahren vorgegeben und kann aliphatischer aber auch aromatischer Natur sein. Zudem kann X Heteroatome, wie z. B. Schwefel, enthalten. Generell können Stern-förmige Polymere durch multifunktionelle Initiatore hergestellt werden, oder kontrollierte bzw. lebende Blockcopolymere werden mit einer multifunktionellen Reaktiveinheit zur Reaktion gebracht.

### Monomere

Die Monomere A für die Copolymerblöcke P(A) und/oder P(A/C) der erfindungsgemäß verwendeten Haftklebemassen werden bevorzugt derart gewählt, dass die resultierenden Blöcke P(A) und/oder P(A/C) in der Lage sind, eine 2-Phasen-Domänenstruktur mit den Copolymer-Blöcken P(B) und/oder P(B/D) auszubilden. Voraussetzung hierfür ist die Nichtmischbarkeit der Blöcke P(B) bzw. P(B/D) mit den Blöcken P(A) bzw. P(A/C). In der 2-Phasen-Domänenstruktur bilden sich Bereiche aus, in welchen sich die Blöcke unterschiedlicher (und gegebenenfalls auch gleicher) Ketten ein- und derselben Monomerensorte miteinander mischen. Diese sogenannten Domänen sind eingebettet in einer Matrix der Blöcke der anderen Monomerensorte. Als Charakteristikum besitzt eine solche 2-Phasen-Domänenstruktur zwei Erweichungs-/Glasübergangstemperaturen.
Mit der Ausbildung zweier Phasen unterschiedlicher Eigenschaften erhält man harte Volumenelemente neben weichen Volumenelementen.

Vorteilhafte Beispiele für Verbindungen, welche als Komponente A eingesetzt werden, sind Acrylsäure, Itaconsäure, Methacrylsäure, Hydroxyethylacrylat, Hydroxypropylacrylat, Hydroxyethylmethacrylat, Hydroxypropylmethacrylat, Acrylamid, Vinylphosphonsäure, Vinylsulfonsäure, Vinylsulfonsäure Natriumsalz.
Weiterhin können als Komponente A auch zwitterionische Monomere eingesetzt werden, wie z. B. die Gruppe der Betaine. Als Betaine eignen sich z. B. Ammoniumcarboxylate, Ammoniumphosphate und Ammoniumsulfonate. Spezielle Beispiele sind z. B. N-(3-sulfopropyl)-N-acryloxyethyl-N,N-dimethyl ammonium betain, 1-(3-Sulfopropyl)-2-vinyl-pyridinium betain, N-(3-Sulfopropyl)-N-allyl-N,N-dimethyl amonium betain. Besonders bevorzugte Beispiele sind N-(3-Sulfopropyl)-N-methacryloxy-ethyl-N,N-dimethyl ammonium betain und N-(3-Sulfopropyl)-N-acryloxy-ethyl-N,N-dimethylammonium betain. N-(3-Sulfopropyl)-N-methacryloxy-ethyl-N,N-dimethyl ammonium betain ist kommerziell erhältlich von der Firma Raschig AG, Deutschland. Diese Aufzählung besitzt keinen Anspruch auf Vollständigkeit.

Als Monomere B für die Copolymerblöcke P(B) und/oder P(B/D) der erfindungsgemäß verwendeten Haftklebemassen werden vorteilhaft Acrylmonomere oder Vinylmonomere eingesetzt, besonders bevorzugt solche, die die Erweichungs-/Glasübergangstemperatur des Copolymerblocks P(B/D) - auch in Kombination mit Monomer D - auf unterhalb 0 °C herabsetzen.
In sehr vorteilhafter Weise für die erfindungsgemäße Haftklebemasse wird als Komponente B eine oder mehrere Verbindungen, welche sich durch die folgende allgemeinen Formel beschreiben lassen, eingesetzt.

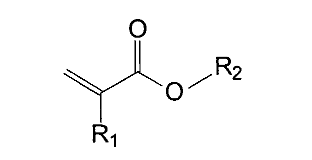

Dabei ist R₁ = H oder CH₃, der Rest R₂ wird gewählt aus der Gruppe der verzweigten oder unverzweigten, gesättigten Alkylgruppen mit 4 bis 14 Kohlenstoffatomen.

Acrylmomonere, die bevorzugt für die erfinderische Haftklebemasse als Komponente B eingesetzt werden, umfassen Acryl- und Methacrylsäureester mit Alkylgruppen bestehend aus 4 bis 18 C-Atomen, bevorzugt 4 bis 9 C-Atomen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat und deren verzweigten Isomere, wie z. B. 2-Ethylhexylacrylat.
Weiterhin werden optional als Monomer B Vinylmonomere aus den folgenden Gruppen eingesetzt: Vinylester, Vinylether, Vinylhalogenide, Vinylidenhalogenide, Vinylverbindungen mit aromatischen Cyclen und Heterocyclen in α-Stellung. Auch hier seien nicht ausschließlich einige Beispiele genannt: Vinylacetat, Vinylformamid, Ethylvinylether, Vinylchlorid, Vinylidenchlorid, Acrylonitril.

Als Monomere C werden in bevorzugter Weise Acrylmonomere oder Vinylmonomere eingesetzt, die die Erweichungs-/Glasübergangstemperatur des Copolymerblocks P(A/C) - auch in Kombination mit Monomer A - auf oberhalb 20 °C heraufsetzen. In einer vorteilhaften Variante des erfindungsgemäßen Verfahrens werden (Meth)acrylmonomere eingesetzt, insbesondere solche entsprechend der folgenden allgemeinen Formel: 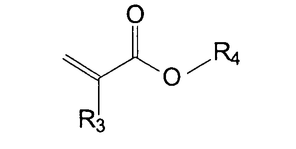 wobei R₃ = H oder CH₃ ist und der Rest -OR₄ die funktionelle Gruppe zur Erhöhung der Kohäsion der Haftklebemasse darstellt oder beinhaltet.
Beispiele für die Komponente C sind Methylmetacrylat, Cyclohexylmethacrylat, t-Butylacrylat, Allylalkohol, Isobornylmethacrylat, Isobornylacrylat Maleinsäureanhydrid, Itaconsäureanhydrid, Benzoinacrylat, acryliertes Benzophenon, Acrylamide (wie beispielsweise N-t-Butylacrylamid, N-Isopropylacrylamid, Dimethylacrylamid) und Glyceridylmethacrylat, Benzylacrylat, Benzylmethacrylat, Phenylacrylat, Phenylmethacrylat, t-Butylphenylacrylat, t-Butylphenylmethacrylat, 4-Biphenylacrylat, 2-Naphthylacrylat und 2-Naphthylmethacrylat, wobei diese Aufzählung nicht abschließend ist.

Dabei werden bevorzugt gewählt:
a) für Dipol-Dipol-Wechselwirkungen- und/oder Wasserstoffbrücken-bildenden Eigenschaften:
   Acrylamide, Methylmethacrylat
b) zur Vernetzung mit energiereicher Strahlung:
   Benzoinacrylat, acryliertes Benzophenon
c) zur thermischen Vernetzung:
   Maleinsäureanhydrid, Itaconsäureanhydrid, Glyceridylmethacrylat, aber auch alle Acrylamide.

Mit t-Butylacrylat wird eine zusätzliche Steigerung der Erweichungs-/Glasübergangstemperatur ohne Erhöhung der Polarität bewirkt.

Als Monomere C werden weiterhin Vinylaromaten, die auch alkyliert, funktionalisiert oder oder Heteroatome enthalten können, die aromatischen Kerne aus C₄ bis C₁₈ besitzen, eingesetzt werden. Besonders bevorzugte Beispiele sind Styrol, α-Methylstyrol, 4-Vinylbenzoesäure, 4-Vinylbenzolsulfonsäure Natriumsalz, 4-Vinylbenzylalkohol, 2-Vinylnaphthalin, 4-Vinylphenylboronsäure, 4-Vinylpyridin, Vinylsulfonsäurephenylester, 3,4-Dimethoxystyrol, Vinylbenzotrifluorid, p-Methoxystyrol, 4-Vinylanisol, 9-Vinylanthracen, 1-Vinylimidazol, 4-Ethoxystyrol, N-Vinylphthalimid, wobei diese Aufzählung keinen Anspruch auf Vollständigkeit erhebt.

Die Komponente C kann weiterhin ein mit einer copolymerisierbaren Vinylgruppe ausgestatteter UV-Fotoinitiator sein, welche zur strahlenchemischen Vernetzung befähigt ist, insbesondere zu einer Vernetzung, welche durch UV-Bestrahlung hervorgerufen wird.
Als Photoinitiatoren sind Norrish I und II Photoinitiatoren geeignet. Beispiele sind z. B. Benzoinacrylat und ein acryliertes Benzophenon der Fa. UCB (Ebecryl P 36® ). Diese Aufzählung ist nicht vollständig. Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren, die mit einer Doppelbindung funktionalisiert werden können, wird in Fouassier:"Photoinititation, Photopolymerization and Photocuring: Fundamentals and Applications", Hanser-Verlag, München 1995, gegeben. Ergänzend kann auf Carroy et al. in "Chemistry and Technology of UV and EB Formulation for Coatings, Inks and Paints", Oldring (Hrsg.), 1994, SITA, London, verwiesen werden.

Als Komponente D werden in einer bevorzugten Auslegung Monomere eingesetzt, die eine funktionelle Gruppe tragen. Die funktionelle Gruppe der Komponente D ist eine solche Gruppe, welche durch den Einfluß z. B. thermischer Energie zu einer Vernetzungsreaktion befähigt ist. Vorteilhaft wird die funktionelle Gruppe der Komponente D als Hydroxy-, Carboxy-, Epoxy-, Säureamid-, Isocyanato- oder Aminogruppe gewählt. Konkrete Beispiele für Monomer D sind daher Acrylsäure, Hydroxyethylacrylat, Hydroxypropylacrylat, Methacrylsäure, Methylmethacrylat, Hydroxyethylmethacrylat, Hydroxypropylmethacrylat, tert.-Butylacrylat, Itaconsäureanhydrid, Itaconsäure, Acrylamide, wie z.B. N-tert.-Butylacrylamid , N-Isopropylacrylamid oder Dimethylacrylamid, und Maleinsäureanhydrid.

Vorteilhaft kann die zur Vernetzung befähigte funktionelle Gruppe der Komponente D eine ungesättigte Gruppe sein, welche zur strahlenchemischen Vernetzung befähigt ist, insbesondere durch eine Vernetzung, welche durch UV-Bestrahlung oder durch Bestrahlung mit Elektronenstrahlen hervorgerufen wird. Es hat sich als günstig herausgestellt, wenn die zur Vernetzung befähigte funktionelle Gruppe der Komponente D ein ungesättigter Alkylrest mit 3 bis 8 Kohlenstoffatomen ist, welcher mindestens eine C-C-Doppelbindung aufweist.

Als Monomere für die Komponente D kann in günstiger Weise zumindest eine Verbindung der folgenden allgemeinen Formel 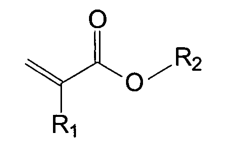 eingesetzt werden, wobei R₁ = H oder CH₃ und -OR₂ die funktionelle Gruppe wie oben definiert darstellt oder beinhaltet. Dabei kann die Komponente D derart gewählt werden, dass sie die Erweichungs-/Glasübergangstemperatur des Copolymer-Blocks P(B/D) auf T_{G} < 0 °C herabsetzt.

Die Komponente D kann aber auch einen mit einer copolymerisierbaren Vinylgruppe ausgestatteten UV-Fotoinitiator umfassen, welcher zur strahlenchemischen Vernetzung befähigt ist, insbesondere zu einer Vernetzung, welche durch UV-Bestrahlung hervorgerufen wird.
Als Photoinitiatoren sind Norrish I und II Photoinitiatoren geeignet. Beispiele sind z. B. Benzoinacrylat und ein acryliertes Benzophenon der Fa. UCB (Ebecryl P 36® ). Diese Aufzählung ist nicht vollständig. Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren, die mit einer Doppelbindung funktionalisiert werden können, wird in Fouassier:"Photoinititation, Photopolymerization and Photocuring: Fundamentals and Applications", Hanser-Verlag, München 1995, gegeben. Ergänzend kann auf Carroy et al. in "Chemistry and Technology of UV and EB Formulation for Coatings, Inks and Paints", Oldring (Hrsg.), 1994, SITA, London, verwiesen werden.

### Polymerisationen

Die Polymerisation kann nach einem an sich bekannten Verfahren oder in Abwandlung eines an sich bekannten Verfahrens durchgeführt werden, insbesondere durch konventionelle radikalische Polymerisation und/oder durch kontrollierte radikalische Polymerisation; letztere ist dabei durch die Anwesenheit geeigneter Kontrollreagenzien gekennzeichnet.

Zur Herstellung der Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z. B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und/oder Stabilisatoren zugesetzt.

Findet eine Methode der radikalischen Polymerisation Anwendung, werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (Vlla) oder (Vllb) eingesetzt: 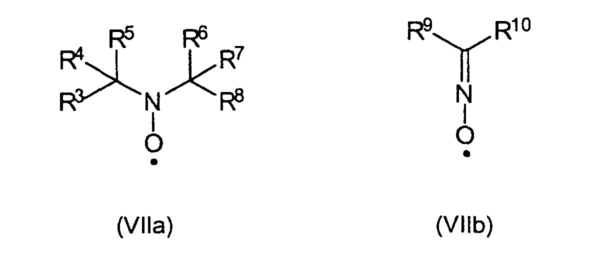 wobei R³, R⁴, R⁵, R⁶, R⁷, R⁸, R⁹, R¹⁰ unabhängig voneinander folgende Verbindungen oder Atome bedeuten:
i) Halogenide, wie z.B. Chlor, Brom oder lod,
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR¹¹, Alkoxide -OR¹² und/oder Phosphonate -PO(OR¹³)₂, wobei R¹¹, R¹² bzw. R¹³ für Reste aus der Gruppe ii) stehen.

Verbindungen der Formel (Vlla) oder (Vllb) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Mehr bevorzugt werden als kontrollierte Regler für die Polymerisation Verbindungen des Typs:
- 2,2,5,5-Tetramethyl-1-pyrrolidinyloxyl (PROXYL), 3-Carbamoyl-PROXYL, 2,2-Dimethyl-4,5-cyclohexyl-PROXYL, 3-Oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL;
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl;
- N-tert.-Butyl-1-phenyl-2-methyl propyl Nitroxid;
- N-tert.-Butyl-1-(2-naphtyl)-2-methyl propyl Nitroxid;
- N-tert.-Butyl-1-diethylphosphono-2,2-dimethyl propyl Nitroxid;
- N-tert.-Butyl-1-dibenzylphosphono-2,2-dimethyl propyl Nitroxid;
- N-(1-Phenyl-2-methyl propyl)-1-diethylphosphono-1-methyl ethyl Nitroxid;
- Di-t-Butylnitroxid;
- Diphenylnitroxid;
- t-Butyl-t-amyl Nitroxid.

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Ais weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1 ) eingesetzt werden. Die unterschiedlichen Möglichkeiten der ATRP sind ferner in den Schriften US 5,945,491 A, US 5,854,364 A und US 5,789,487 A beschrieben.

Weiterhin vorteilhaft kann das erfindungsgemäße genutzte Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im allgemeinen durch die Struktur P_{L}(A)-Me repräsentiert, wobei Me ein Metall der Gruppe I, wie z.B. Lithium, Natrium oder Kalium, und P_{L}(A) ein wachsender Polymerblock aus den Monomeren A. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) anpolymerisiert, so dass ein Triblockcopolymer P(A)-P(B)-P(A) entsteht. Alternativ kann P(A)-P(B)-M durch eine geeignete difunktionelle Verbindung gekuppelt werden. Auf diesem Weg sind auch Sternblockcopolymere (P(B)-P(A))ₙ zugänglich. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Nach der anionischen Polymerisation empfiehlt es sich zur Freisetzung der polaren Gruppen eine polymeranaloge Reaktion durchzuführen. Eine Möglichkeit zur Herstellung von mit Carbonsäuregruppen funktionalisierten Acrylatblockcopolymeren verläuft über die anionische Polymerisation von tert.-Butylacrylat, wobei nach der Polymerisation die tert.-Butylgruppe mit Trifluoressigsäure hydrolisiert werden kann und somit die Carbonsäuregruppe freigesetzt wird.

Als sehr bevorzugter Herstellungsprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur R'"-S-C(S)-S-R'" (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (VIII) und (IX) oder die Thioverbindungen (X) und (XI) zur Polymerisation eingesetzt, wobei φ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättigten aliphatischen Rest sein kann . Der Phenylring φ kann optional einen oder mehrere Polymerblöcke tragen, entsprechend der Definition für P(A), P(B), P(A/C) und P(B/D). Funktionalisierungen können beispielsweise Halogene, Hydroxygruppen, Epoxidgruppen, stickstoff- oder schwefelenthaltende Gruppen sein, ohne dass diese Liste Anspruch auf Vollständigkeit erhebt.

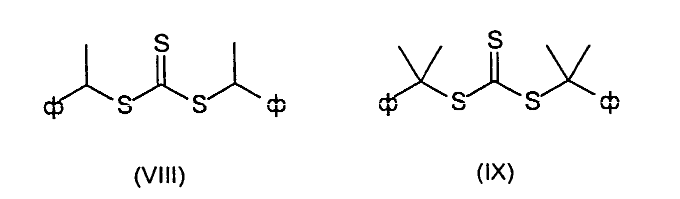

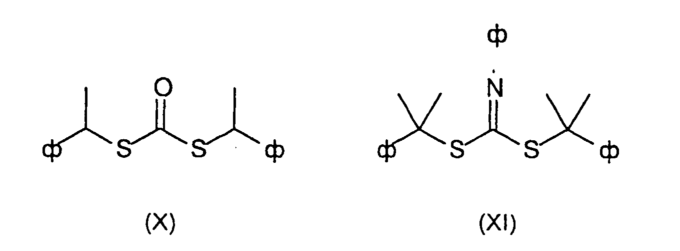

Außerdem können Thioester der allgemeinen Struktur R^{IV}-C(S)-S-R^{V} zum Einsatz kommen, insbesondere, um asymmetrische Systeme herzustellen. Dabei können R^{IV} und R^{V} unabhängig von einander gewählt werden, wobei R^{IV} ein Rest aus einer der folgenden Gruppen i) bis iv) und R^{V} ein Rest aus einer der folgenden Gruppen i) bis iii) sein kann:
i) C₁- bis C₁₈-Alkyl, C₂- bis C₁₈-Alkenyl, C₂- bis C₁₈-Alkinyl, jeweils linear oder verzweigt; Aryl-, Phenyl-, Benzyl-, aliphatische und aromatische Heterozyklen;
ii) -NH₂, -NH-R^{VI}, -NR^{VI}R^{VII}, -NH-C(O)-R^{VI}, -NR^{VI}-C(O)-R^{VII}, -NH-C(S)-R^{VI} -NR^{VI}-C(S)-R^{VII}, 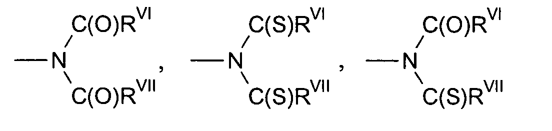 wobei R^{VI} und R^{VII} unabhängig voneinander gewählte Reste aus der Gruppe i) sind;
iii) -S-R^{VIII}, -S-C(S)-R^{VIII}, wobei R^{VIII} ein Rest aus einer der Gruppen i) oder ii) sein kann;
iv) -O-R^{VIII}, -O-C(O)-R^{VIII}, wobei R^{VIII} ein Rest, gewählt aus einer der Gruppen i) oder ii), sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88® , DuPont® ) oder 2,2-Azo-bis-(2-methylbutannitril) (Vazo 67® , DuPont® ) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.
Erfindungsgemäß wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Zur erfindungsgemäßen Weiterentwicklung können den blockcopolymerhaltigen repulpierbaren Haftklebemassen Klebharze beigemischt werden. Prinzipiell lassen sich alle in dem entsprechenden Polyacrylatblöcken P(A), P(B), P(A/C) und P(B/D) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. In US 09/040,024, US 6,133,391, US 5,489,642 und US 4,413,082 werden weitere besonders für repulpierbare Haftklebemassen geeignete Harze und Weichmacher genannt bzw. zitiert.

Vorrangig werden Harze gewählt, die vorzugsweise mit dem Elastomerblock verträglich sind. Der Gewichtsanteil der Harze am Blockcopolymer beträgt typischerweise bis zu 60 Gew.-%, mehr bevorzugt bis zu 50 Gew.-%.
Für eine spezielle Art der Ausführung der Erfindung können auch Harze verwendet werden, die speziell in nur einem der Polymerblöcke P(A), P(B), P(A/C), P(B/D) verträglich sind.
Weiterhin können optional Weichmacher (Plastifizierungsmittel), Füllstoffe (z. B. Fasern (z. B. Cellulosefasern, Polyvinylalkoholfasern), Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch die physikalische Phasenseparierung der Polymerblöcke erzeugt. Die so erhaltene physikalische Vernetzung ist typischerweise thermoreversibel. Für eine nichtreversible Vernetzung können die Haftklebemassen zusätzlich chemisch vernetzt werden. Hierzu können den acrylatblockcopolymerhaltigen Haftklebemassen, welche für die erfindungsgemäßen repulpierbaren Systeme eingesetzt werden, optional zu den Komponenten C und D zusätzlich verträgliche Vernetzersubstanzen zugesetzt werden. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.
Weiterhin kann es von Vorteil sein, dass die aciden Gruppen der Carbonsäure, der Alkohole, der Sulfonsäure oder der Phosphorsäuren mit Basen deprotoniert werden und somit eine Agglomeration innerhalb der Phasen eintritt. Im einfachsten Fall werden basische organische und anorganische Verbindungen zugesetzt, wie z. B. NaOH, KOH, Triethylamin, Trimethylamin, Dimethylamin. Es können aber auch mutlifunktionelle Basen, wie z. B. multifunktionelle Amine eingesetzt werden.

Zur optionalen Vernetzung mit UV-Licht werden den polyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin- oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London, zu Rate gezogen werden.

Prinzipiell ist es auch möglich, die erfindungsgemäß eingesetzten repulpierbaren Haftklebemassen mit Elektronenstrahlen zu bestrahlen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

### Produktaufbauten der haftklebrigen Blattmaterialien

Das Haftklebeband kann durch die Beschichtung der oben beschriebenen Haftklebemassenzusammensetzung auf eine oder mehrere Oberflächen eines Trägers hergestellt werden. Auf diesem Weg sind ein- und doppelseitige Haftklebebänder zugänglich. Für den Fall, dass ein repulpierbares Haftklebeband hergestellt wird, sollte der Träger ebenfafis repuipierbar sein.

Für die Verwendung als Haftklebeband kann es ebenfalls erforderlich sein, die Haftklebemasse mit einem Releaseliner abzudecken. Kommerziell erhältlich sind z. B. silikonisierte Trennpapiere.

Weiterhin können die repulpierbaren Haftklebemassen direkt ohne Trägermaterial appliziert werden. In diesem Fall wird z. B. die Haftklebemasse aufgesprüht.

Neben speziellen repulpierbaren Papierträgern kann es auch von Vorteil sein, die erfinderischen Haftklebemassen auf einen konventionellen Papierträger aufzubringen. So eignen sich z. B. auch graphische Papiere oder Papiere für den Offsetdruck.

Neben der Anwendung der repulpierbaren Haftklebemassen bzw. Haftklebebänder für den Papierherstellungsprozess können die erfinderischen Haftklebemassen auch zur Herstellung von Labels, Masking-Haftklebebändern, selbstklebenden Briefmarken sowie selbstklebenden Tapeten oder Wanddekorationen eingesetzt werden.

### Beispiele

### Prüfmethoden

### A. Repulpierbarkeit

Der Test wurde analog zur Testmethode Tappi UM 213 A für recycelfähige und wasserdispergierbare Haftklebebänder durchgeführt. Das Testpapier für die Verklebung ist "James River Pulp Testing Paper white 417-01-50" von Curtis Paper Division. Die Wasserhärte beträgt 300 mg CaO/I Wasser entsprechend 30 dh.

### B. Statischer Schertest

Zunächst wird die Haftklebemasse auf eine silikonisiertes Trennpapier aus Lösung aufgebracht und dann 20 Minuten bei 100°C getrocknet. Der Masseauftrag beträgt ca. 50 g/m². Anschließend werden 13 x 20 mm-Streifen ausgeschnitten und auf zwei graphische Papierstreifen (Turbo-Press T54G Feldmühle AG) mit 20 mm Breite und 100 mm Länge laminiert. Die lange Seite der rechteckigen Haftklebefläche wurden länglich der Papierstreifen und 3,5 mm entfernt von den Ecken angeordnet. Die Splices wurden hergestellt durch Ausüben eines Druckes durch eine Stahlrolle mit 2 kg Eigengewicht. Die Stahlrolle wurde mit einer Geschwindigkeit von 0,2 m/s 5 mal über die Splices gerollt und anschließend wurde der Splice für 48 h bei 23 °C und 55 % Luftfeuchtigkeit konditioniert. Anschließend wurde eine Scherkraft auf den Splice in länglicher Richtung zu den Papierstreifen ausgeübt. Mit einem Schergewicht von 10 N wurde die Zeit gemessen, die benötigt wird, damit die Haftklebemasse komplett abschert, oder es wird innerhalb einer bestimmten Zeit die Scherstrecke gemessen.

### C. Gelpermeationschromatograpie (GPC)

Die Bestimmung des mittleren Molekulargewichtes M_{W} und der Polydispersität PD erfolgte durch Gelpermeationschromatographie. Als Eluent wurde THF mit 0.1 Vol.-% Trifluoressigsäure eingesetzt. Die Messung erfolgte bei 25°C. Als Vorsäule wurde PSS-SDV, 5µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen Polystyrol-Standards gemessen.

### Prüfmusterherstellung

### Herstellung eines RAFT-Reglers:

Die Herstellung des Reglers Bis-2,2'-phenylethyltrithiocarbonats (Formel VIII) erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %.

¹H-NMR (CDCl₃), δ: 7,20-7,40 ppm (m, 10 H); 3,81 ppm (m, 1 H); 3,71 ppm (m, 1 H); 1,59 ppm (d, 3 H); 1,53 ppm (d, 3 H).

### Beispiel 1:

In einem für die radikalische Polymerisation konventionellem 2 L-Reaktor werden unter Stickstoffatmosphäre 40 g Acrylsäure, 40 g 2-Ethylhexylacrylat, 1,2 g Regler Bis-2,2'-phenylethyltrithiocarbonat und 80 g Aceton vorgelegt. Es wird auf 60 °C Innentemperatur erhitzt und mit 0,2 g Vazo 67® (DuPont) ; gelöst in 5 g Aceton, initiiert. Nach 1,5 Stunden Reaktionszeit wird mit 0,2 g Vazo 67® (DuPont), gelöst in 5 g Aceton, nachinitiiert. Nach 5 und 7 Stunden Reaktionszeit wird mit jeweils 50 g Aceton verdünnt.

Nach 24 Stunden Reaktionszeit wird eine Probe entnommen. Die Durchführung der Gelpermeationschromatographie (Test C) gegen Polystyrol Standards ergab M_{N} = 30.100 g/mol und M_{W} = 35.300 g/mol.

Die Polymerisation wird im gleichen Reaktor nach 24 h Reaktionszeit fortgesetzt. Zum Polymer werden 320 g 2-Ethylhexylacrylat, 80 g Aceton und 20 g Isopropanol hinzugegeben. Nach 24,75 Stunden Reaktionszeit wird mit 0,2 g Vazo 67® (DuPont), gelöst in 5 g Aceton, nachinitiiert. Nach 28,5 und 32 Stunden wird mit jeweils 50 g Aceton verdünnt. Nach 48 Stunden wird mit 0,2 g Vazo 67® (DuPont), gelöst in 5 g Aceton, nachinitiiert. Nach 55,5 Stunden werden 20 g Aceton hinzugegeben und nach 72 Stunden wird die Reaktion durch Abkühlen auf Raumtemperatur abgebrochen.

Die Durchführung der Gelpermeationschromatographie (Test C) gegen Polystyrol Standards ergab M_{N} = 41.900 g/mol und M_{W} = 77.400 g/mol.

### Beispiel 2:

In einem für die radikalische Polymerisation konventionellem 2 L-Reaktor werden unter Stickstoffatmosphäre 80 g Acrylsäure, 160 g DMF und 0,8 g Regler Bis-2,2'-phenylethyltrithiocarbonat vorgelegt. Es wird auf 60 °C Innentemperatur erhitzt und mit 0,2 g Vazo 67® (DuPont), gelöst in 5 g DMF, initiiert. Nach 48 Stunden Reaktionszeit wird auf Raumtemperatur abgekühlt und das Lösemittel DMF (Dimethylformamid) im Rotationsverdampfer abdestilliert. Die Durchführung der Gelpermeationschromatographie (Test C) gegen Polystyrol Standards ergab M_{N} = 7.500 g/mol und M_{W} = 15.200 g/mol.

Die Polymerisation wird im gleichen Reaktor nach 24h fortgesetzt. Zur Polyacrylsäure werden 80 g 2-Ethylhexylacrylat, 160 g Aceton und 40 g Ethanol hinzugegeben. Bei einer Innentemperatur von 60 °C wird mit 0.1 g Vazo 67® (DuPont), gelöst in 5 g Aceton, initiiert. Nach 24 Stunden wird mit 0,1 g Vazo 67® (DuPont), gelöst in 5 g Aceton, nachinitiiert und nach 32 h wird mit 50 g Aceton verdünnt. Nach 48 h wird die Reaktion durch Abkühlen auf Raumtemperatur abgebrochen.

Die Durchführung der Geipermeationschromatographie (Test C) gegen Polystyrol Standards ergab M_{N} = 54.700 g/mol und M_{W} = 103.800 g/mol.

### Beispiel 3:

In einem für die radikalische Polymerisation konventionellem 2 L-Reaktor werden unter Stickstoffatmosphäre 80 g Acrylsäure, 160 g DMF und 0,8 g Regler Bis-2,2'-phenylethyltrithiocarbonat vorgelegt. Es wird auf 60 °C Innentemperatur erhitzt und mit 0,2 g Vazo 67® (DuPont), gelöst in 5 g DMF, initiiert. Nach 48 Stunden Reaktionszeit wird auf Raumtemperatur abgekühlt und das Lösemittel DMF (Dimethylformamid) im Rotationsverdampfer abdestilliert. Die Durchführung der Gelpermeationschromatographie (Test C) gegen Polystyrol Standards ergab M_{N} = 7.500 g/mol und M_{W} = 15.200 g/mol.

Die Polymerisation wird im gleichen Reaktor nach 24h fortgesetzt. Zur Polyacrylsäure werden 60 g 2-Ethylhexylacrylat, 20 g Acrylsäure, 160 g Aceton und 30 g Ethanol hinzugegeben. Bei einer Innentemperatur von 60 °C wird mit 0,1 g Vazo 67® (DuPont), gelöst in 5 g Aceton, initiiert. Nach 24 Stunden wird mit 0,1 g Vazo 67® (DuPont), gelöst in 5 g Aceton, nachinitiiert, und nach 32 h wird mit 50 g Aceton verdünnt. Nach 48 h wird die Reaktion durch Abkühlen auf Raumtemperatur abgebrochen.

Die Durchführung der Gelpermeationschromatographie (Test C) gegen Polystyrol Standards ergab M_{N} = 59.200 g/mol und M_{W} = 110.300 g/mol.

### Herstellung des haftklebrigen Materials

50 g der Beispiele 1, 2 und 3 (bezogen auf den Polymeranteil) wurden jeweils mit 115 g ethoxyliertem flüssigen primären Kokosnussöl amin abgemischt. Dieser Weichmacher basiert auf einem primären Amin, wobei alle Hydrogenatome substituiert sind mit ethoxylierten Seitenketten. Der Weichmacher enthält pro Aminofunktion ca. 15 Ethoxyeinheiten und ist erhältlich unter den Tradenamen Ethomeen C 25 von der Fa. Akzo Nobel. Zu der jeweiligen Mischung werden jeweils 0,1 g Bisglycidyl Ether des Bisphenol A zugegeben und eine klare Lösung durch Zugabe von Wasser und Aceton eingestellt.

### Ergebnisse

Die GPC-Messungen belegen, dass die im ersten Schritt hergestellten Polyacrylsäure durch Reinitiierung zur Herstellung von Acrylsäurehaltigen Blockcopolymeren eingesetzt werden kann. Durch den im zweiten Schritt erfolgten Aufbau des Mittelblocks steigt das Molekulargewicht nochmals deutlich an - ein eindeutiges Indiz für die sequentielle Polymerisation.

Die hergestellten Polymere (Beispiele 1 bis 3) wurden dann jeweils mit einem Weichmacher und einem thermischen Vernetzer abgemischt. Zur Überprüfung der Repulpierbarkeit wurde der Test A zur Bestimmung der inneren Festigkeit der Test B durchgeführt. Alle Beispiele 1 bis 3 waren nach Test A einwandfrei repulpierbar. Die Ergebnisse des statischen Schertestes sind im Folgenden aufgelistet:
Beispiel 1: 200 min
Beispiel 2: 800 min
Beispiel 3: > 5000 min

## Patentansprüche

1. Repulpierbare Haftklebemasse, umfassend zumindest ein Blockcopolymer auf Polyacrylatbasis.

2. Repulpierbare Haftklebemasse nach Anspruch 1, **dadurch gekennzeichnet, dass** das Blockcopolymer eine Abfolge von harten Polymerblöcken [P(A)] mit einer Erweichungs-/Glasübergangstemperatur nicht weniger als 20 °C und mit zumindest einer polaren Einheit und von weichen Polymerblöcken [P(B)] mit einer Erweichungs-/Glasübergangstemperatur von nicht mehr als 0 °C ist.

3. Repulpierbare Haftklebemasse nach Anspruch 1, **dadurch gekennzeichnet, dass** das Blockcopolymer eine Triblockstruktur P(A)-P(B)-P(A) und/oder P(B)-P(A)-P(B) aufweist, wobei P(A) ein harter Polymerblock mit einer Erweichungs-/Glasübergangstemperatur nicht weniger als 20 °C und zumindest einer polaren Einheit ist und P(B) ein weicher Polymerblock mit einer Erweichungs-/Glasübergangstemperatur von nicht mehr als 0 °C ist.

4. Repulpierbare Haftklebemasse nach Anspruch 1, **dadurch gekennzeichnet, dass** das Blockcopolymer eine Abfolge von harten Polymerblöcken [P(A)] mit einer Erweichungs-/Glasübergangstemperatur von nicht weniger 20 °C und zumindest einer polaren Einheit und von weichen Polymerblöcken [P(B)] mit einer Erweichungs-/Glasübergangstemperatur von nicht mehr als 0 °C ist und das Blockcopolymer in den Polymerblöcken P(A) und/oder P(B) zumindest ein Comonomer mit zumindest einer funktionellen Gruppe aufweist, welche sich in einer radikalischen Polymerisationsreaktion inert verhält und welche eine Vernetzungsreaktion der Blockcopolymere fördern kann und/oder die Erweichungs-/Glasübergangstemperatur heraufsetzt.

5. Repulpierbare Haftklebemasse nach Anspruch 1, **dadurch gekennzeichnet, dass** das Blockcopolymer eine P(A)-P(B/D)-P(A)-Struktur aufweist, wobei
P(B/D) einen Copolymerblock aus den Monomeren B und D darstellt und eine Erweichungs-/Glasübergangstemperatur von -80 °C bis 0 °C besitzt, wobei die Komponente D mindestens eine funktionelle Gruppe besitzt, welche sich in einer radikalischen Polymerisationsreaktion inert verhält und zur Steigerung der Kohäsion des Blockcopolymers dient;
P(A) einen Polymerblock aus den Monomeren A darstellt und eine Erweichungs-/Glasübergangstemperatur von 20 °C bis 175 °C besitzt und zumindest eine polare Einheit trägt; und
der Polymerblock P(A) in dem Copolymerblock P(B/D) unlöslich ist und der Polymerblock P(A) und der Copolymerblock P(B/D) nicht mischbar sind.

6. Repulpierbare Haftklebemasse nach Anspruch 5, **dadurch gekennzeichnet, dass** der Anteil der Polymerblöcke P(A) in dem Blockcopolymer 10 bis 60 Gew.-% beträgt.

7. Repulpierbare Haftklebemasse nach Anspruch 5, **dadurch gekennzeichnet, dass** der Anteil der Komponente D in dem Copolymerblock P(B/D) 0,5 bis 30 Gew.-% beträgt.

8. Repulpierbare Haftklebemasse nach Anspruch 1, **dadurch gekennzeichnet, dass** das Blockcopolymer eine P(B)-P(A)-P(B)- oder P(B/D)-P(A)-P(B/D)-Struktur aufweist, wobei
P(B) einen Polymerblock aus den Monomeren B darstellt und eine Erweichungs-/Glasübergangstemperatur von nicht mehr als 0 °C besitzt;
P(B/D) einen Copolymerblock aus den Monomeren B und D darstellt und eine Erweichungs-/Glasübergangstemperatur von nicht mehr als 0 °C besitzt, wobei die Komponente D mindestens eine funktionelle Gruppe besitzt, welche sich in einer radikalischen Polymerisationsreaktion inert verhält und welche zur Steigerung der Kohäsion des Blockcopolymers dient;
P(A) einen Polymerblock aus den Monomeren A darstellt und eine Erweichungs-/Glasübergangstemperatur von nicht weniger als 20 °C besitzt und zumindest eine polare Einheit trägt; und
der Polymerblock P(A) in dem Polymerblock P(B) oder dem Copolymerblock P(B/D) unlöslich ist und der Polymerblock P(B) sowie der Copolymerblock P(B/D) und P(A) nicht mischbar sind.

9. Repulpierbare Haftklebemasse nach Anspruch 8, **dadurch gekennzeichnet, dass** der Anteil der Poiymerbiöcke P(A) in dem Blockcopolymer 30 bis 70 Gew.-% beträgt.

10. Repulpierbare Haftklebemasse nach Anspruch 8, **dadurch gekennzeichnet, dass** der Anteil der Komponente D in dem Copolymerblock P(B/D) 0,5 bis 30 Gew.-% beträgt.

11. Repulpierbare Haftklebemasse nach Anspruch 1, **dadurch gekennzeichnet, dass** das Blockcopolymer eine P(A/C)-P(B)-P(A/C)-Struktur aufweist, wobei
P(B) ein Polymerblock aus den Monomeren B darstellt und eine Erweichungs-/Glasübergangstemperatur von -80 °C bis 0 °C besitzt;
P(A/C) ein Polymer aus zumindest zwei Monomeren A und C darstellt und eine Erweichungs-/Glasübergangstemperatur von 20 °C bis 175 °C besitzt, wobei die Komponente C aus der Gruppe der Monomere gewählt ist, die als Homopolymere eine Erweichungs-/Glasübergangstemperatur von größer 60 °C aufweisen oder zur UV-Vernetzung befähigt sind; und
der Polymerblock P(B) in dem Copolymerblock P(A/C) unlöslich ist und der Polymerblock P(B) und der Copolymerblock P(A/C) nicht mischbar sind.

12. Repulpierbare Haftklebemasse nach Anspruch 11, **dadurch gekennzeichnet, dass** der Anteil der Copolymerblöcke P(A/C) in dem Blockcopolymer 30 bis 65 Gew.-% beträgt.

13. Repulpierbare Haftklebemasse nach Anspruch 11, **dadurch gekennzeichnet, dass** der Anteil der Komponente C in dem Copolymerblock P(A/C) 0,5 bis 30 Gew.-% beträgt.

14. Repulpierbare Haftklebemasse nach Anspruch 1, **dadurch gekennzeichnet, dass** das Blockcopolymer eine [P(A)-P(B)]ₙX-Struktur oder eine [P(A)-P(B)]ₙX[P(B)]ₘ-Struktur aufweist, wobei
n eine Ganzzahl von 3 bis 12, m eine Ganzzahl von 3 bis 12 und X einen multifunktionellen Verzweigungsbereich darstellen;
P(A) einen Polymerblock aus den Monomeren A darstellt und eine Erweichungs-/Glasübergangstemperatur im Bereich von 20 °C bis 175 °C aufweist und zumindest eine polare Einheit trägt; und
P(B) einen Polymerblock aus den Monomeren B darstellt und eine Erweichungs-/Glasübergangstemperatur im Bereich von - 80 °C bis 0 °C aufweist.

15. Repulpierbares Haftklebeband mit einem Trägermaterial, **dadurch gekennzeichnet, dass** zumindest eine Seite des Trägermaterials mit einer Haftklebemasse nach einem der vorangehenden Ansprüche ausgestattet ist.

16. Verwendung eines repulpierbaren Haftklebebandes nach Anspruch 15 als Splicing-Tape.
